# EUROPEAN PATENT APPLICATION

(11) **EP 2 520 392 A1**
(43) Date of publication of application: **07.11.2012**
(21) Application number: 11183280.4
(22) Date of filing: 29.09.2011
(51) Int. Cl.: B23G 9/00, B23G 5/06, B23C 5/10, B23B 5/16, B23B 51/04, B23C 3/05

(54) **Self-centring mill, particularly for threaded holes**

(30) Priority: 06.05.2011 IT MO20110101
(71) Applicant: GO.VO.NI. S.R.L., 41124 Modena (IT)
(72) Inventor: VERRILLO, Antonio, 40017 SAn Giovanni in Persiceto (Province of Bologna) (IT); VERRILLO, Davide, 40019 SANT'AGATA BOLOGNESE BO (IT); MITRATI, Marco, 40017 SAN GIOVANNI IN PERSICETO BO (IT)
(74) Representative: Modiano, Micaela Nadia

(57) **Abstract**

A self-centring mill (1), particularly for threaded holes, comprising a centring device (10) which is insertable in a threaded hole (100) provided in a surface to be cut (110) and is associable with a cylindrical hollow end mill (20) to cut the surface that is adjacent to the threaded hole (100) along a cutting plane which is substantially perpendicular to the axis (101) of the threaded hole (100). The centring device (10) comprises a hollow expandable sleeve (40) insertable with play in said threaded hole (100) and provided with a threaded outer surface (42) adapted to engage the thread of said threaded hole (100) once it has expanded.

## Description

The present invention relates to a self-centering mill, particularly for threaded holes.

The hydraulic tightness problems that arise from couplings of the screw-and-nut type, in which at least one of the two coupled elements is partly worn, are known.

In particular, in the automotive field this problem is observed at the base of the engine, where the oil sump has, on its bottom, at least one threaded drain hole which is coupled to a threaded plug for emptying and subsequently changing the oil of the engine for regular vehicle maintenance.

The repeated unscrewing and screwing of the threaded plug, which is mainly manual without any tightening torque control, leads to rapid wear of the thread and of the abutment plane against which the sealing gasket, interposed between the plane and the plug, adheres.

Moreover, all this is worsened by the fact that the box-like body of the engine is mainly made of aluminum, i.e., an extremely ductile material, which can wear easily in each step of assembly and disassembly.

In order to be able to obviate this drawback, one proceeds with the repair of the thread by means of tapping machines of the known type, minimizing the seepage of the oil through the screw-and-nut coupling, and silicon-based pastes with a sealing function are interposed between the sealing gasket and the abutment plane of the oil sump.

Such silicon-based pastes tend, over time, to lose their elasticity without ensuring a good hydraulic seal of the drain hole of the oil sump.

This drawback can be obviated by repairing the abutment plane of the drain hole of the oil sump through a step of manual milling of the abutment plane.

These manual mills of the known type are not free from drawbacks, including the fact that they do not ensure perfect perpendicularity of the abutment plane with respect to the axis of the threaded hole. If the repair of the abutment plane occurs along a plane that is not perpendicular to the axis of the threaded hole, oil seepage is increased.

For this reason, the milling step is performed preferably by means of automatic mills with a centering system on their own worktable.

This means that the operator must place the engine of the vehicle on the worktable of the mills, requiring the disassembly and reassembly thereof and making this process onerous, complicated and time-consuming.

The aim of the present invention is to provide a self-centering mill, particularly for threaded holes, that obviates the drawbacks and overcomes the limitations of the background art, making it possible to restore the abutment plane of a threaded hole so as to ensure its perpendicularity with respect to the axis of said threaded hole.

Within this aim, an object of the present invention is to provide a self-centering mill that can be used in place with no need of installing the body provided with the threaded hole on an adapted worktable.

Another object of the invention is to provide a self-centering mill that is easy to provide and economically competitive if compared to the background art.

This aim, as well as these and other objects which will become better apparent hereinafter, are achieved by a self-centering mill, particularly for threaded holes, characterized in that it comprises a centering device which is insertable in a threaded hole provided in a surface to be cut and is associable with a hollow end mill so as to cut said surface to be cut along a cutting plane which is substantially perpendicular to the axis of said threaded hole.

Further characteristics and advantages of the present invention will become better apparent from the description of a preferred but not exclusive embodiment of a self-centering mill, particularly for threaded holes, illustrated by way of non-limiting example with the aid of the accompanying drawings, wherein:

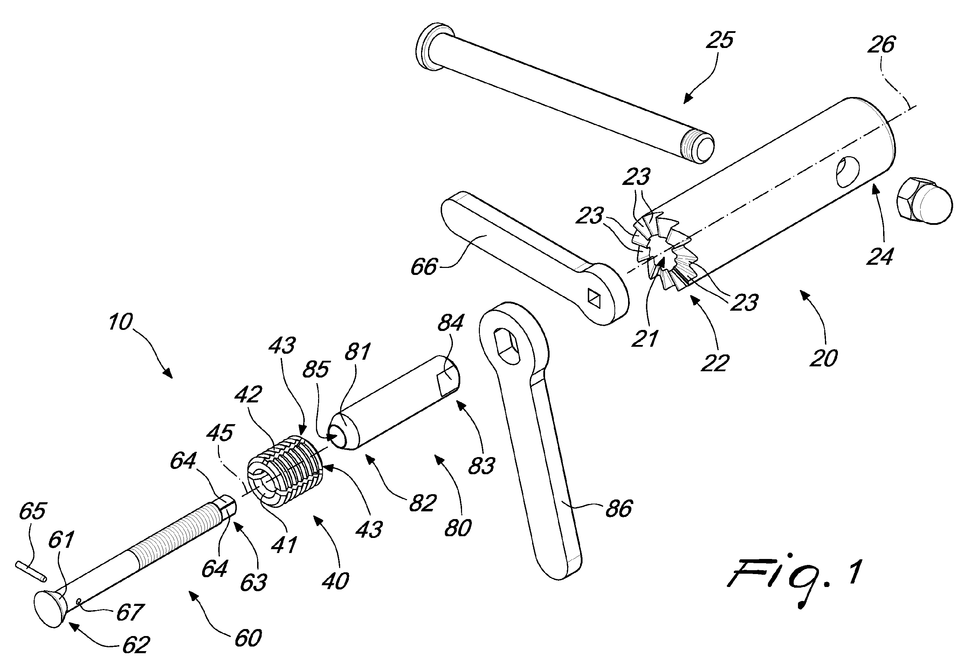

Figure 1 is an exploded perspective view of an embodiment of a self-centering mill according to the invention;
Figure 2 is an enlarged-scale perspective view of an expanding sleeve of the self-centering mill shown in Figure 1;
Figure 3 is a top plan view of the expanding sleeve shown in Figure 2;
Figure 4 is a sectional view of the expanding sleeve shown in Figure 3, taken along the line IV-IV;
Figure 5 is a sectional view of the expanding sleeve shown in Figure 3, taken along the line V-V;
Figure 6 is a view of a step of insertion of the self-centering mill in a threaded hole, according to the invention;
Figure 7 is a view of a step of adhesion of the expanding sleeve to the threaded hole, according to the invention;
Figure 8 is a view of a step of the cutting of the end mill engaged rotatably on the centering contrast pin, according to the invention.

With reference to the figures, a self-centering mill, particularly for threaded holes, generally designated by the reference numeral 1, according to the invention, comprises a centering device 10 which can be inserted in a threaded hole 100 provided in a surface to be cut 110 and associable with a cylindrical hollow end mill 20.

In particular, the centering device 10 is composed of a hollow expanding sleeve 40, a centering pin 60 and a centering contrast pin 80.

The expanding sleeve 40 can be inserted with play in the threaded hole 100 and has a threaded external surface 42 adapted to engage with the thread of the threaded hole 100 once it has expanded.

In addition to this, the expanding sleeve 40 is provided, on its body, which is substantially cylindrical with a circular cross-section, with a plurality of cuts 43 for defining a plurality of expandable radial sectors and with two conical internal opposite ends 41, which can be fitted respectively by the centering pin 60, which has a first conical contact surface 61, and by the centering contrast pin 80, which has a second conical contact surface 81.

Moreover, the centering pin 60 and the centering contrast pin 80 can be coupled detachably by means of a screw-and-nut coupling for their mutual approach.

Specifically, the cuts 43 are substantially straight, radially and substantially parallel to the longitudinal axis 45 of the expanding sleeve 40. Each one of the cuts 43 is a through cut, connecting the external surface 42 to an internal surface 44 that extends substantially along the entire length of the expanding sleeve 40.

Advantageously, each cut 43 sections substantially along almost all of its length the expanding sleeve 40, leaving a portion 48 thereof which is not sectioned. In a radial alternating manner, the portion 48 is present on a final end 46 or on an initial end 47 of the expanding sleeve 40, i.e., each one of the plurality of cuts 43 is extended alternately from the final end 46 or from the initial end 47 to the respective portion 48, without sectioning completely the expanding sleeve 40.

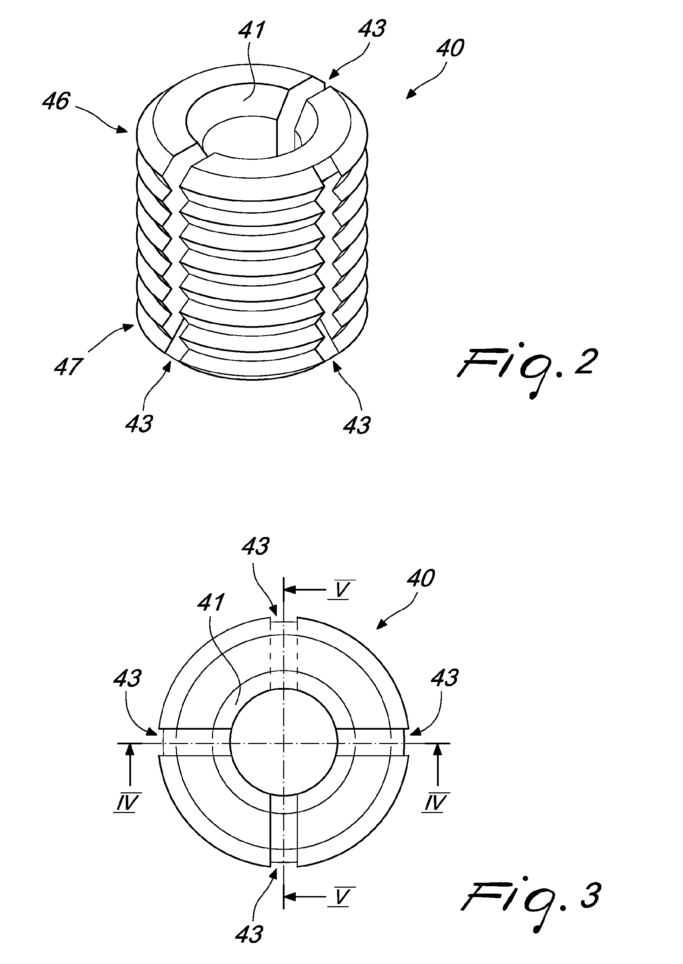

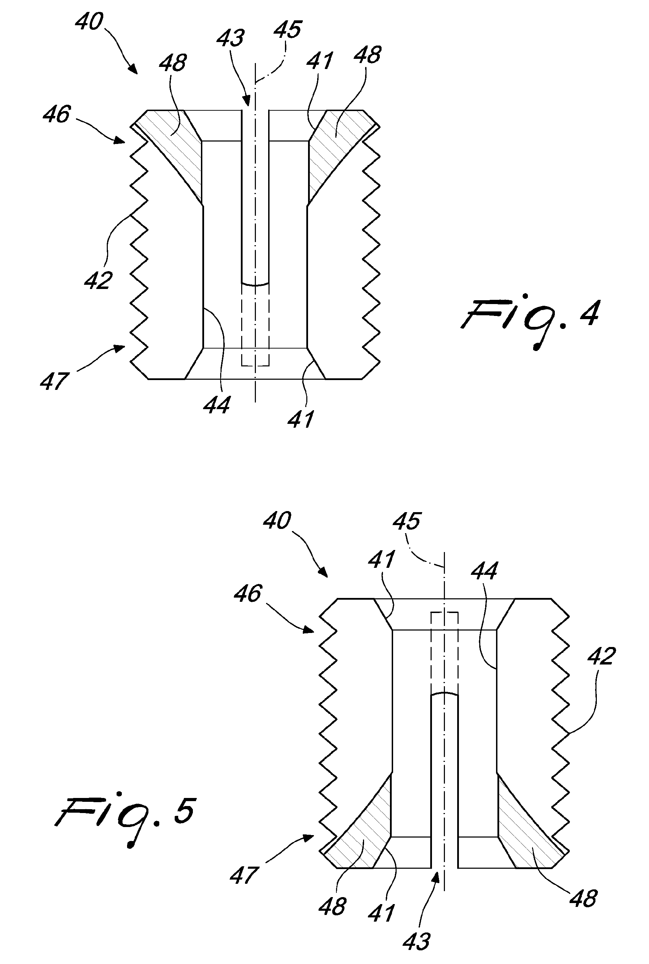

In this particular embodiment, the plurality of cuts 43 comprises four cuts which are mutually spaced at 90° with respect to the longitudinal axis 45, i.e., arranged in a cross-like manner as shown in Figure 3. Moreover, the portion 48 has a substantially triangular cross-section, as shown in the sectional views of Figures 4 and 5.

The centering pin 60, which fits the expanding sleeve 40, has a substantially cylindrical body with a circular cross-section with two opposite ends that can be defined as a leading end 62 and a handling end 63 and has, on its outer surface 42, substantially between the leading end 62 and the handling end 63, a male thread.

The leading end 62 has a substantially conical shape with the apex directed toward the center of the centering pin 60 and has the first contact surface 61.

The handling end 63 is provided with first handling elements 64 which can engage detachably in respective first handling keys 66. Moreover, proximate to the leading end 62, an engagement element 65 extends from the centering pin 60 and can be coupled in at least one of the plurality of cuts 43.

In this particular embodiment, the centering pin 60 has a shape that is substantially similar to a screw with a flared flat head, since it has, on its leading end 62, an accommodation hole 67 in which the engagement element 65, i.e., a pin, is inserted, and has, on the handling end 63, a portion of the centering pin 60 that is reduced to a square cross-section so as to use the four successive faces as first handling elements 63. The first handling elements 63 can thus engage in a respective first handling key 66, which has an elongated shape and is provided, at one of its ends, with a hole with a square cross-section that can be fitted perfectly on the handling end 63.

An internal cavity 85 extends in the centering contrast pin 80, with a substantially tubular shape, and has, along its entire length, a female thread that can be mated with the screw that is provided on the outer surface of the centering pin 60.

Moreover, the second contact surface 81 extends from the centering contrast pin 80 on a leading apex 82 and is similar to the first contact surface 61 but has an opposite orientation, and on a handling apex 83, which is opposite with respect to the leading apex 82, second handling elements 84 are provided.

In this particular embodiment, the second handling elements 84 are composed of two opposite flat faces provided on the outer surface of the centering contrast pin 80. The second handling elements 84 can engage in a respective second handling key 86, which has an elongated shape and has, at one of its ends, a circular hole with two mutually parallel rectilinear narrower regions which can be fitted perfectly on the handling apex 83.

Finally, the end milll 20 comprises a substantially tubular body and has a cylindrical cavity 21 provided with a circular cross-section that can be fitted perfectly on the centering contrast pin 80 by means of a bit end 22.

Advantageously, on the bit end 22 and particularly on a plane that is substantially perpendicular to the longitudinal axis 26 of the end mill 20 a plurality of cutting elements 23 adapted for cutting are provided. In addition to this, the end mill 20 has, on an end tip 24 which is opposite with respect to the bit end 22, third handling elements 25.

In this particular embodiment, the cutting elements 23 are crests which are arranged radially with respect to the longitudinal axis 26 of the end mill 20 with sharp ends made of thermally treated material or with other treatments adapted to increase the surface hardness of the crests, such as for example tempering treatments and subsequent hardenings. Moreover, the third handling element 25 is composed of a threaded screw that passes through the body of the end mill 20 and is fixed thereto by means of a respective bolt.

Operation of the self-centering mill, particularly for threaded holes, is described hereafter.

The centering pin 60 is inserted in the expanding sleeve 40 by means of the handling end 63, taking care to arrange the engagement element 65 in two cuts 43. The two elements are arranged inside a threaded hole 100.

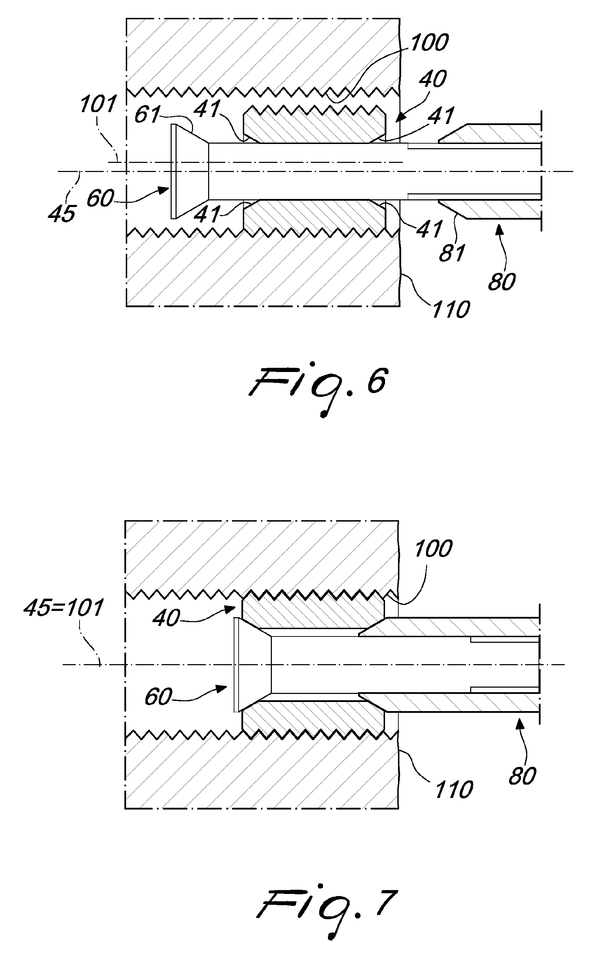

Conveniently, the insertion in the threaded hole 100 occurs with the leading end 62, taking care to insert all of the expanding sleeve 40 in the threaded hole 100, as shown in Figure 6.

Conveniently, the centering pin 60 is long enough to accommodate completely the expanding sleeve 40 in the threaded hole 100 and exit from it by a length that is sufficient for it to be fitted by the centering contrast pin 80 by means of the leading apex 82.

The centering contrast pin 80 is shorter than the centering pin 60, so much that the handling end 63 protrudes from the handling apex 83. In this configuration, one proceeds with the screwing of the centering contrast pin 80 on the centering pin 60 by means of the rotation of the second handling keys 86 with respect to the first handling keys 66.

Accordingly, the screwing described above allows the progressive approach of the centering pin 60 to the centering contrast pin 80 until contact of the respective first contact surface 61 and second contact surface 81 with the opposite conical internal ends 41 of the expanding sleeve 40 occurs.

The first contact surface 61 and the second contact surface 81, thanks to their conical shape, tend to expand the opposite conical internal ends 41 of the expanding sleeve 40, particularly moving away the opposite faces of the expanding sleeve 40 which are separated by each one of the plurality of cuts 43 where the portion 48 is not present. This allows an alternated radial expansion of the expanding sleeve 40, which adheres to the threaded hole 100.

During this step, the expanding sleeve 40 is locked rotatably by means of the engagement element 65 inserted in at least one cut 43.

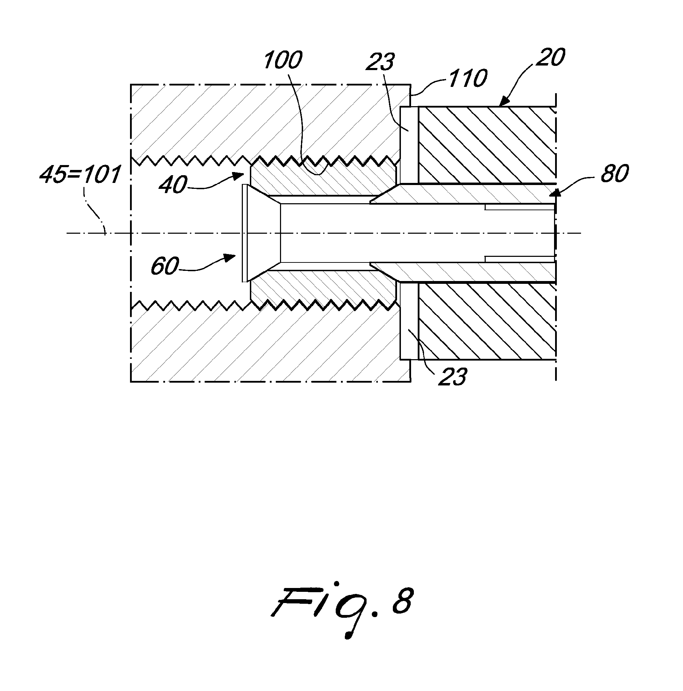

After fixing firmly the expanding sleeve 40 to the threaded hole 100 by means of its expansion caused by the approach of the centering pin 60 and of the centering contrast pin 80, the end mill 20 is fitted on the outer surface of the centering contrast pin 80 by the bit end 22 and one proceeds with a step of manual cutting, as shown in Figure 8.

In such last step it is sufficient to turn manually the end mill 20 by means of the third handling element 25, making the plurality of cutting elements 23 adhere to the surface to be cut 110.

The milling that can be obtained occurs by complying with the perpendicularity of the axis 101 of the threaded hole 100, since the expanding sleeve 40 adheres directly and radially to the internal thread of the threaded hole 100, being coaxial thereto. The various elements that can be fitted onto the expanding sleeve 40 are in turn coaxial to the sleeve and consequently the plurality of cutting elements 23 arranged on a plane that is perpendicular to the longitudinal axis 26 of the end mil 20 is perpendicular to the axis 101 of the threaded hole 100, perfectly restoring the abutment plane of the threaded hole 100.

In practice it has been found that the self-centering mill, particularly for threaded holes, according to the present invention achieves the intended aim and objects, since it makes it possible to restore the abutment plane of a threaded hole, ensuring its perpendicularity with respect to the axis of the threaded hole.

Another advantage of the self-centering mill according to the invention resides in that it can be used in place without installing the body provided with the threaded hole on an adapted worktable.

A further advantage of the self-centering mill according to the invention is that it can be provided easily and is economically competitive with respect to the background art.

A further advantage of the self-centering mill according to the invention is that it has a practically nil operating cost, since it requires no external power supply.

The self-centering mill particularly for threaded holes thus conceived is susceptible of numerous modifications and variations, all of which are within the scope of the appended claims.

All the details may furthermore be replaced with other technically equivalent elements.

In practice, the materials used, so long as they are compatible with the specific use, as well as the contingent shapes and dimensions, may be any according to requirements.

The disclosures in Italian Patent Application No. MO2011A000101, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A self-centering mill (1), particularly for threaded holes, **characterized in that** it comprises a centering device (10) which is insertable in a threaded hole (100) provided in a surface to be cut (110) and is associable with an end mill (20) to cut said surface to be cut (110) along a cutting plane which is substantially perpendicular to the axis (101) of said threaded hole (100).

2. The self-centering mill (1) according to claim 1, **characterized in that** said centering device (10) comprises a hollow expanding sleeve (40) insertable with play in said threaded hole (100) and provided with a threaded outer surface (42) which is adapted to engage the thread of said threaded hole (100) once it has expanded.

3. The self-centering mill (1) according to claim 2, **characterized in that** said expanding sleeve (40) is provided by a substantially cylindrical body having a circular cross-section, which is provided with a plurality of through cuts (43) between said outer surface (42) and an inner surface (44) of said expanding sleeve (40), said expanding sleeve (40) comprising two opposite conical inner ends (41) engageable respectively with a centering pin (60), which is provided with a first conical contact surface (61), and a centering contrast pin (80), which has a second conical contact surface (81), said centering pin (60) and said centering contrast pin (80) being mutually detachably associable by a screw-and-nut coupling for their mutual approach with consequent radial expansion of said expanding sleeve (40).

4. The self-centering mill (1) according to one or more of the preceding claims, **characterized in that** said plurality of cuts (43) lies substantially parallel to the longitudinal axis (45) of said expanding sleeve (40) to define a plurality of radially expandable sectors.

5. The self-centering mill (1) according to one or more of the preceding claims, **characterized in that** said plurality of cuts (43) lies alternately in opposite directions which are parallel to said longitudinal axis (45) for most of the length of said expanding sleeve (40), leaving alternately on a final end (46) or on an initial end (47) a portion (48) of said expanding sleeve (40) which is not sectioned.

6. The self-centering mill (1) according to one or more of the preceding claims, **characterized in that** said first contact surface (61) is arranged on a leading end (62), first handling elements (64) being furthermore comprised on a handling end (63) which is opposite with respect to said leading end (62).

7. The self-centering mill (1) according to one or more of the preceding claims, **characterized in that** said second contact surface (81) is arranged on a leading apex (82) of said centering contrast pin (80), second handling elements (84) being furthermore comprised which are arranged on a handling apex (83), which is opposite with respect to said leading apex (82).

8. The self-centering mill (1) according to one or more of the preceding claims, **characterized in that** said centering pin (60) comprises laterally, proximate to said leading end (62), an engagement element (65) connectable within at least one of said plurality of cuts (43).

9. The self-centering mill (1) according to one or more of the preceding claims, **characterized in that** said end mill (20) comprises a substantially tubular body which has a cavity (21) in which said centering contrast pin (80) is insertable by a bit end (22), said bit end (22) having, on a plane which is substantially perpendicular to the longitudinal axis (26) of said end mill (20), a plurality of cutting elements (23).

10. The self-centering mill (1) according to one or more of the preceding claims, **characterized in that** said end mill (20) comprises, on an end tip (24), which lies opposite said bit end (22), third handling elements (25), which are adapted for the manual rotation of said end mill (20) in order to cut said surface to be cut (110).
